# EUROPÄISCHE PATENTSCHRIFT

(11) **EP 1 763 984 B1**
(45) Veröffentlichungstag und Bekanntmachung des Hinweises auf die Patenterteilung: **30.07.2008**
(21) Anmeldenummer: 06018907.3
(22) Anmeldetag: 09.09.2006
(51) Int. Cl.: A01C 7/08

(54) **Pneumatische Verteilmaschine**
Pneumatic seed drill
Semoir pneumatique

(30) Priorität: 17.09.2005 DE 102005044571
(43) Veröffentlichungstag der Anmeldung: 21.03.2007
(73) Patentinhaber: Amazonen-Werke H. Dreyer GmbH & Co. KG, 49205 Hasbergen (DE)
(72) Erfinder: Heitmeyer, Kilian, 49152 Bad Essen (DE)

(56) Entgegenhaltungen:
- EP-A- 1 560 157
- EP-A1- 0 763 317
- DE-A1- 10 352 314
- JP-A- 4 135 422

## Beschreibung

Die Erfindung betrifft eine pneumatische Verteilmaschine gemäß des Oberbegriffes des Patentanspruches 1.

Eine derartige Verteilmaschine ist beispielsweise in der EP 0 763 317 B1 beschrieben. Diese Verteilmaschine weist einen Vorratsbehälter auf, von dem aus über eine Dosiereinrichtung das Saatgut in eine pneumatische Förderleitung eingespeist wird. Diese Förderleitung weist ein Steigrohr auf, an dessen Ende ein dem Förderstrom auf mehrere, zu Ausbringelementen führende Ausbringleitungen aufteilender Verteilerkopf angeordnet ist. Durch den Aufprall des sich im Förderstrom befindlichen Saatgutes auf die Prallfläche des Verteilerkopfes wird das Saatgut auf die vom Verteilerkopf wegführenden Ausbringleitungen aufgeteilt. Wenn das Steigrohr senkrecht ausgerichtet ist, ist sichergestellt, dass das sich im Förderstrom befindliche Saatgut mittig auf die Prallfläche des Verteilerkopfes auftrifft. Bei Fahrten quer zum Hang oder hangaufwärts oder -abwärts ist das Steigrohr nicht mehr senkrecht ausgerichtet, so dass das sich im Förderstrom befindliche Saatgut nicht in der Mitte der Prallfläche des Verteilerkopfes auftrifft, so dass das Saatgut ungleichmäßig auf die von dem Verteilerkopf wegführenden Ausbringleitungen aufgeteilt wird.

Der Erfindung liegt die Aufgabe zugrunde, in einfacher Weise sicherzustellen, dass auch bei Fahrt quer zum Hang oder hangaufwärts oder - abwärts sichergestellt ist, dass das sich im Förderstrom befindliche Saatgut möglichst mittig auf die Prallfläche des Verteilerkopfes auftrifft.

Diese Aufgabe wird erfindungsgemäß durch die kennzeichnenden Merkmale des Patentanspruches 1 gelöst. Infolge dieser Maßnahmen wird aufgrund der von dem Neigungssensor ermittelten Neigung berechnet, um wie viel sich das Steigrohr abweichend von der Senkrechten befindet. Aufgrund dieses ermittelten Wertes oder der ermittelten Werte wird das Steigrohr durch die Verstellelemente in eine zumindest annähernd senkrechte Position gebracht, so dass das sich im Förderstrom befindliche Saatgut mittig auf die Prallfläche des Verteilerkopfes auftrifft. Hierdurch ist die Grundvoraussetzung dafür gegeben, dass das Saatgut gleichmäßig auf die vom Verteilerkopf wegführenden Ausbringleitungen aufgeteilt wird.

Um zu ermöglichen, dass das Steigrohr gegenüber dem übrigen Teil der Förderleitung zum entsprechenden Nachstellen und Bringen in die senkrechte Lage verstellt werden kann, ist vorgesehen, dass in dem unteren Ende des Steigrohres ein kugelgelenkartiges Verbindungselement angeordnet ist. Es ist auch möglich, dass anstelle eines kugelgelenkartigen Verbindungselementes ein elastischer Bereich am Beginn des Steigrohres in der Förderleitung angeordnet ist.

Eine einfache Nachstellung des Steigrohres in die jeweils senkrechte Position wird dadurch erreicht, dass der Neigungssensor mit einem elektronischen Bordrechner verbunden ist, dass der Bordrechner entsprechend der Signale des Neigungssensors Einstellsignale an die Verstellelemente übermittelt.

Um zu verhindern, dass das Steigrohr aufgrund der Nachstellung und der Daten des Neigungssensors in Schwingungen gerät, ist vorgesehen, dass der Bordrechner bei einer Abweichung des Steigrohres von mehr als 3° von der Senkrechten Einstellsignale an die Stellelemente übermittelt.

Damit der Neigungssensor die Neigung des Steigrohres in jeder Richtung ermitteln kann, so dass in allen Richtungen das Steigrohr senkrecht ausgerichtet ist, ist vorgesehen, dass der Neigungssensor auf zwei sich kreuzenden Achsen wirksam ist.

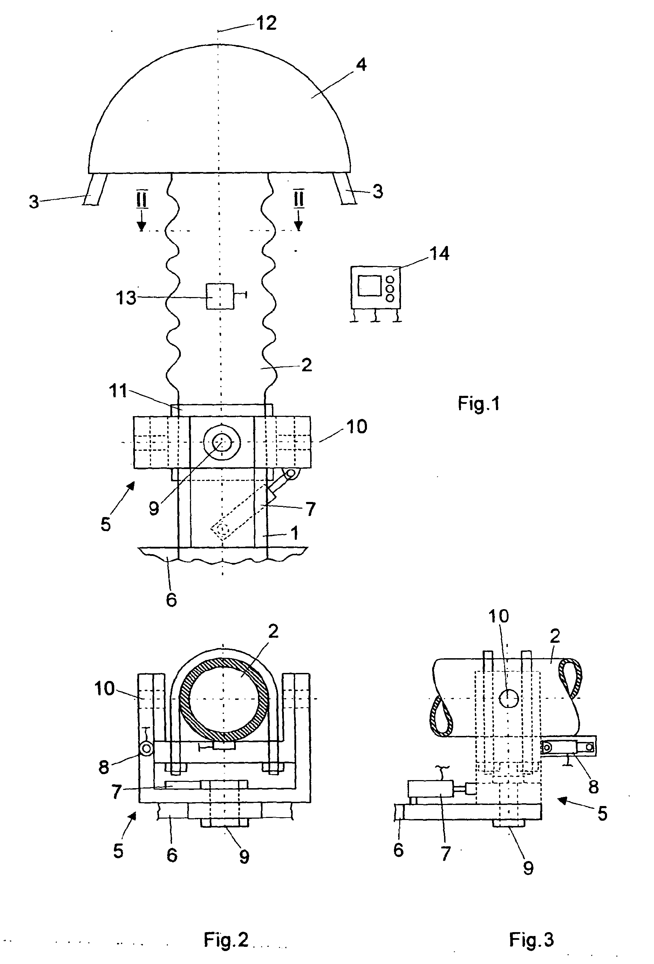

Weitere Einzelheiten der Erfindung sind der Beispielsbeschreibung und den Zeichnungen zu entnehmen. Hierbei zeigen
- Fig. 1: den Verteilerkopf mit Steigrohr einer pneumatischen Verteilmaschine mit der erfindungsgemäßen Anordnung in der Ansicht von vorne und in Prinzipdarstellung,
- Fig. 2: die Aufhängung des Steigrohres in der Ansicht II-II und
- Fig. 3: die Aufhängung des Steigrohres in Seitenansicht.

Die Verteilmaschine weist einen nicht dargestellten Rahmen, Vorratsbehälter, Dosiereinrichtung und eine pneumatisch beaufschlagte Förderleitung 1 auf, die in das Steigrohr 2 mündet. An dem Ende der Förderleitung, die von dem Steigrohr 2 gebildet wird, ist ein zu nicht dargestellten Ausbringelementen führende Ausbringleitungen 3 aufteilender Verteilerkopf 4 angeordnet. Das Steigrohr 2 ist mittels einer kreuzgelenkartigen Aufhängung 5 einem Rahmenteil 6 des Rahmens der Maschine angeordnet. Mittels der kreuzgelenkartigen Aufhängung 5, der die beiden Stellelemente 7, 8 zugeordnet sind, kann das Steigrohr 2 um die beiden sich kreuzenden Achsen 9, 10 verschwenkt werden und so immer in eine annähernd senkrechte Position eingestellt werden. Um das Verschwenken des Steigrohres 2 zu ermöglichen, ist am unteren Ende des Steigrohres 2 ein elastischer Bereich 11 in der Förderleitung 1 angeordnet, der auch in nicht dargestellter Weise kugelgelenkartig ausgebildet sein kann.

Um die Ausrichtung des Steigrohres 2 zur Senkrechten 12 zu ermitteln ist an dem Steigrohr 2 der Neigungssensor 13, der auf zwei sich kreuzenden Achsen wirksam ist angeordnet, um so die Stellung bzw. Neigung des Steigrohres 2 zur Senkrechten 12 in jeder Richtung ermitteln zu können. Der Neigungssensor 13 übermittelt die Daten an einen elektronischen Bordrechner 14. Der Bordrechner 14 ermittelt die Stellung des Steigrohres 2 zur Senkrechten 12. Falls das Steigrohr 2 in der einen oder anderen Richtung von der Senkrechten 12 abweicht übermittelt, der Bordrechner 14 Signale an die zwischen dem Rahmen und Steigrohr 2 wirksamen Verstellelemente 7, 8, so dass das Steigrohr 2 in eine zumindest annähernd senkrechte Position eingestellt wird. Hierbei werden die Verstellelemente 7, 8 von dem Bordrechner 14 nur angesteuert, wenn der Bordrechner 14 aufgrund der vom Neigungssensor 13 übermittelten Daten feststellt, dass das Steigrohr 2 mehr als 3° von der Senkrechten 12 abweicht. Hierdurch wird verhindert, dass das Steigrohr 2 bzw. die Verstellung des Steigrohres 2 sich aufschwingen kann.

## Patentansprüche

1. Pneumatische Verteilmaschine mit einem Rahmen, vorratsbehälter, Dosiereinrichtung und einer pneumatisch beaufschlagten und ein Steigrohr (2) aufweisenden Förderleitung (1), an deren Ende ein den Förderstrom auf mehrere, zu Ausbringelementen führende Ausbringleitungen (3) aufteilender Verteilerkopf (4) angeordnet ist, **dadurch gekennzeichnet, dass** zumindest ein Neigungssensor (13) an der Maschine angeordnet ist, dass das Steigrohr (2) mit dem Verteilerkopf (4) mittels einer kugelkopf- und/oder kreuzgelenkartigen Aufhängung (5) am Rahmen und/oder Rahmenteile (6) der Maschine angeordnet ist, und dass zwischen dem Rahmen und/oder Rahmenteilen (6) und dem Steigrohr (2) zumindest zwei Verstellelemente (7,8) angeordnet sind, dass mittels der von dem Neigungssensor ermittelten Daten das Steigrohr (2) durch die Verstellelemente (7,8) in eine zumindest annähernd senkrechte Position einstellbar ist.

2. Verteilmaschine nach Anspruch 1, **dadurch gekennzeichnet, dass** in dem unteren Ende des Steigrohres (2) ein kugelgelenkartiges Verbindungselement angeordnet ist.

3. Verteilmaschine nach einem oder mehreren der vorstehenden Ansprüche, **dadurch gekennzeichnet, dass** der Neigungssensor (13) mit einem elektronischen Bordrechner (14) verbunden ist, dass der Bordrechner (14) entsprechend der Signale des Neigungssensors (13) Einstellsignale an die Verstellelemente (7,8) übermittelt.

4. Verteilmaschine nach einem oder mehreren der vorstehenden Ansprüche, **dadurch gekennzeichnet, dass** der Bordrechner (14) bei einer Abweichung des Steigrohres (2) von mehr als 3° von der Senkrechten (12) Einstellsignale an die Stellelemente (7,8) übermittelt.

5. Verteilmaschine nach einem oder mehreren der vorstehenden Ansprüche, **dadurch gekennzeichnet, dass** der Neigungssensor (13) auf zwei sich kreuzende Achsen wirksam ist.

## Claims

1. Pneumatic distributor including a frame, hopper, metering device and a supply line (1), which is impinged upon pneumatically and includes an ascending pipe (2), a distributing head (4) that divides the flow into a plurality of discharge lines leading to the discharge elements being disposed at the end of the said supply line, **characterised in that** at least one inclination sensor (13) is disposed at the distributor, **in that** the ascending pipe (2) with the distributor head (4) is disposed on the frame and/or frame parts (6) of the distributor by means of a spherical-type and/or universal joint-type suspension, and **in that** at least two adjusting elements (7, 8) are disposed between the frame and/or frame parts (6) and the ascending pipe (2), **in that** the ascending pipe (2) is adjustable into an at least approximately upright position via the adjusting elements (7, 8) by means of the data determined by the inclination sensor.

2. Distributor according to claim 1, **characterised in that** a ball-and-socket joint-type connecting element is disposed in the bottom end of the ascending pipe (2).

3. Distributor according to one or more of the preceding claims, **characterised in that** the inclination sensor (13) is connected to an electronic on-board computer (14), **in that** the on-board computer (14) transmits adjustment signals to the adjusting elements (7, 8) in accordance with the signals of the inclination sensor (13).

4. Distributor according to one or more of the preceding claims, **characterised in that** the on-board computer (14) transmits adjustment signals to the adjusting element (7, 8) if there is a deviation of the ascending pipe (2) in excess of 3° from the perpendicular (12).

5. Distributor according to one or more of the preceding claims, **characterised in that** the inclination sensor (13) is effective on two intersecting axes.

## Revendications

1. Distributeur pneumatique comportant un châssis, un réservoir, une installation de dosage et une conduite de transfert (1) ayant une colonne montante (2) et dont l'extrémité comporte une tête de distribution, (4) qui répartit le flux de transfert entre plusieurs conduites de distribution (4) débouchant sur des éléments de distribution,
**caractérisé en ce qu'**
au moins un capteur d'inclinaison (3) est associé à la machine,
la colonne montante (2) étant reliée par la tête de distribution (4) à l'aide d'une suspension à rotule et/ou à cardan (5), au châssis et/ou les parties de châssis (6) de la machine et
entre le châssis et/ou les parties de châssis (6) et la colonne montante (2) il y a au moins deux actionneurs (7, 8),
à l'aide des données fournies par le capteur d'inclinaison, les actionneurs (7, 8) règlent la colonne montante (2) sensiblement dans une position pratiquement verticale.

2. Distributeur selon la revendication 1,
**caractérisé en ce que**
l'extrémité inférieure de la colonne montante (2) comporte un élément de liaison en forme d'articulation à rotule.

3. Distributeur selon l'une ou plusieurs des revendications précédentes,
**caractérisé en ce que**
le capteur d'inclinaison (13) est relié à un ordinateur de bord (14), électronique, qui transmet des signaux de réglage aux actionneurs (7, 8) en fonction des signaux fournis par le capteur d'inclinaison (13).

4. Distributeur selon l'une ou plusieurs des revendications précédentes,
**caractérisé en ce que**
le calculateur embarqué (14) transmet des signaux de réglage aux actionneurs (7, 8) dès que l'écart de la colonne montante (3) est supérieur à 3° par rapport à la direction verticale (12).

5. Distributeur selon l'une ou plusieurs des revendications précédentes,
**caractérisé en ce que**
le capteur d'inclinaison (13) agit sur deux axes qui se croisent.
